# EUROPÄISCHE PATENTSCHRIFT

(11) **EP 1 521 486 B1**
(45) Veröffentlichungstag und Bekanntmachung des Hinweises auf die Patenterteilung: **06.06.2018**
(21) Anmeldenummer: 04103862.1
(22) Anmeldetag: 11.08.2004
(51) Int. Cl.: H04Q 3/00, H04L 29/06

(54) **ANORDNUNG UND VERFAHREN ZUR STEUERUNG VON KOMMUNIKATIONSVERBINDUNGEN**
DEVICE AND METHOD FOR CONTROLLING COMMUNICATION CONNECTIONS
DISPOSITIF ET MÉTHODE POUR LE CONTRÔLE DE CONNEXIONS DE COMMUNICATIONS

(30) Priorität: 30.09.2003 DE 10345548
(43) Veröffentlichungstag der Anmeldung: 06.04.2005
(73) Patentinhaber: Unify GmbH & Co. KG, 80807 München (DE)
(72) Erfinder: Yuan, Ye, 69168 Wiesloch (DE); Müller, Paul, 67705 Trippstadt (DE); Hillenbrand, Markus, 67655 Kaiserslautern (DE); Müller, Harald, 82205 Gilching (DE)
(74) Vertreter: Fritzsche, Thomas

(56) Entgegenhaltungen:
- WO-A2-01/22720
- WO-A2-01/78347
- US-A1- 2003 095 569
- US-A1- 2003 123 432
- US-A1- 2003 182 451

## Beschreibung

Die Erfindung betrifft eine Anordnung und ein Verfahren zur Steuerung von Kommunikationsverbindungen für eine paketorientierte Echtzeitkommunikation zwischen zwei Kommunikationsteilnehmern.

Gegenwärtige paketorientierte Netzwerke werden neben einer Übertragung von Daten zunehmend auch zur Übertragung von Kommunikationsdaten bzw. Echtzeitkommunikationsdaten eingesetzt. Eine Übertragung von Kommunikationsdaten über ein paketorientiertes Netzwerk wird oftmals auch als »Voice over IP«, VoIP, bezeichnet. Unter dem Begriff VoIP wird dabei ein Technologie zur Übertragung von Nutzdaten, wie beispielsweise Sprache, und einem Austausch von verbindungssteuernden Signalisierungsdaten über paketorientierte Netzwerke verstanden.

Für eine paketorientierte Übertragung von Kommunikationsdaten zwischen zwei Teilnehmern sowie für eine Vermittlung der Teilnehmer und einer Bereitstellung von Leistungsmerkmalen sind dabei zwei standardisierte Protokolle für die Realisierung von VoIP bekannt, nämlich H.323 und SIP.

SIP (Session Initiation Protocol) ist ein von der Internet Engineering Task Force (IETF) vorgeschlagener Standard für die Signalisierung von Verbindungen über paketorientierte Netzwerke und wird heute überwiegend im Bereich der Internet-Telephonie sowie für weitere Dienste wie Konferenzinteraktionen, Ereignisbenachrichtigung, Nachrichtenübermittlung usw. eingesetzt.

Der Standard H.323 ist ein internationaler ITU-T-Standard (International Telecommunication Union - Telecommunication Standardization Sector) für die Sprach-, Daten- und Videokommunikation über paketorientierte Netzwerke, der eine Interoperabilität der Herstellerprodukte untereinander gewährleistet.

Bei einer Implementierung paketorientierter Kommunikationstechniken in einem Kommunikationssystem tritt häufig das Problem auf, dass die voraus genannten Protokolle H.323 und SIP koexistieren müssen, um entsprechende, nach dem jeweiligen Kommunikationsprotokoll arbeitende Kommunikationsendgeräte einbinden zu können. Eine Kommunikation eines SIP-Kommunikationsendgeräts mit einem H.323-kompatiblen Kommunikationsendgerät ist jedoch ohne Vorsehung weiterer technischer Einrichtung nicht möglich.

Die bisherigen VoIP-Lösungen basieren auf einer sogenannten eigenständiger Software oder auch »Stand Alone«-Software. Unter dieser eigenständigen Software versteht man eine im Kommunikationsendgerät bzw. - in allgemeinerer Form - in einem »Client« installierte Software, welche sowohl Signalisierungs- als auch Nutzdaten verarbeitet. Ein Nachteil einer solchen Lösung besteht darin, dass jede Änderung des Kommunikationsprotokolls sowie jede Einführung neuer zusätzlicher Leistungsmerkmale, nur durch Aktualisierung - bzw. »Update« - dieser Software an jedem Endgerät zu realisieren ist. Für ein Unternehmen bedeutet diese Maßnahme einen sehr hohen Konfigurationsaufwand und damit verbunden einen erheblichen Kostenaufwand.

Ein weiteres Problem besteht in der Komplexität der genannten Software. Mit jeder Einführung neuer Leistungs- und Dienstmerkmale wird diese Software immer komplizierter und umfangreicher. Die im Kommunikationsendgerät implementierte Software - Client-Software - muss neu hinzugekommene Leistungsmerkmale nicht nur erkennen, sondern auch Verfahren zur Ausführung dieser Leistungsmerkmale implementiert haben.

Im Falle einer umfangreichen Stand Alone-Software gestaltet sich eine Integration in nicht für Kommunikationszwecke vorgesehen Applikationen schwierig. Zur Entwicklung dieser Applikationen müssen üblicherweise bereits vorhanden VoIP-Funktionen angepasst oder komplett neu entwickelt werden. Des weiteren ist eine Integration zusätzlicher Leistungsmerkmale von dritten Herstellern nahezu ausgeschlossen.

Einige VoIP-Applikationen bieten zur Integration andere Applikationen Programmierschnittstellen an, welche in der Fachwelt als »Application Program Interface«, API bekannt sind. Zur Integration dieser Programmierschnittstellen in andere Applikationen ist jedoch meist ein weiterer Kompiliergang erforderlich.

Zur Gewährleistung einer Interoperabilität der VoIP-Kommunikationsprotokolle H.323 bzw. SIP ist ein Einsatz sog. Gateways, wie z.B. aus US 2003/0182451 A1, bekannt. Ein Gateway setzt dabei auf dem SIP-Protokoll basierende Signalisierungsdaten in ein für H.323 geeignetes Format um und umgekehrt. Hierbei tritt jedoch oftmals der Fall ein, dass Protokollelemente eines jeweiligen Kommunikationsprotokolls inkompatibel mit Protokollelementen des jeweils anderen Kommunikationsprotokolls sind. Weiterhin tritt häufig der Fall ein, dass eines der beiden Kommunikationsprotokolle Dienste, Applikationen, Bearbeitungsmethoden usw. unterstützt, die im jeweils anderen Kommunikationsprotokoll nicht unterstützt werden.

Zur Umgehung der oben angesprochenen Problematik eines Updates von eigenständiger Software, werden von einigen Dienstanbietern - auch als »Provider« bezeichnet - VoIP-Lösungen als sogenannte Web-Applikation angeboten. Durch den Bezug eines sogenannten Applets über ein paketorientiertes Datennetzwerk und Integration in eine Browser-Umgebung in Form eines sogenannten »Plug In« ist eine Ausführung einer VoIP-Funktionalität über einen Web-Browser möglich. Diese vorgenannte Realisierung verbessert das genannte Update-Problem, bietet aber weiterhin keine Möglichkeit einer nahtlosen Integration in beliebige Applikationen.

Aufgabe der Erfindung ist eine Bereitstellung einer Kommunikationsumgebung, bei deren Einsatz die Probleme des Standes der Technik vermieden werden.

Eine Lösung der Aufgabe erfolgt durch eine Anordnung mit den Merkmalen des Patentanspruchs 1 sowie durch ein Verfahren mit den Merkmalen des Patentanspruchs 7.

In einem paketorientierten Kommunikationssystem ist dabei erfindungsgemäß mindestens ein Kommunikationsleitrechner zur Steuerung von Kommunikationsverbindungen auf Basis von ausgetauschten Signalisierungsnachrichten - beispielsweise SIP bzw. H.323 - eines jeweils voreingestellten Kommunikationsprotokolls vorgesehen. Des weiteren ist mindestens eine Dienstgebereinheit zur Bereitstellung von verbindungsaufbauenden und -steuernden Kommunikationsdiensten auf Basis von bidirektionalen Kommunikationsdienstaufrufen mit mindestens einer Dienstnehmereinheit vorgesehen. Diese Kommunikationsdienste werden als Web-Services angeboten. Die Dienstgebereinheit ist mit Schnittstellen zu der mindestens einen Dienstnehmereinheit sowie zu dem mindestens einen Kommunikationsleitrechner ausgestaltet und enthält Mittel zur Charakterisierung einer erhaltenen Signalisierungsnachricht und zur Entnahme von in der Signalisierungsnachricht enthaltenen Parametern und zur Zuordnung zu einem Kommunikationsdienst. Die Dienstgebereinheit enthält weiterhin Mittel zur Erzeugung mindestens einer Signalisierungsnachricht in Folge eines Kommunikationsdienstaufrufs der mindestens einen Dienstnehmereinheit.

Ein wesentlicher Vorteil des erfindungsgemäßen Verfahrens ist darin zu sehen, dass die verbindungsaufbauenden und -steuernden Kommunikationsdienste von einem Kommunikationsendgerät - wie beispielsweise einem sogenannten SIP-Phone oder auch einem nach dem Standard H.323 operierenden Kommunikationsendgerät - in eine zentrale Dienstgebereinheit verlagert werden.

Mit der erfindungsgemäßen Mitteln entfallen damit aufwändige vormalig in den Dienstnehmereinheiten bzw. »Clients« vorzunehmende Update-Maßnahmen.

Vorteilhaft übernehmen die erfindungsgemäßen Kommunikationsdienste sämtliche Signalisierungsaufgaben des Clients, aus dessen Sicht die erfindungsgemäße Dienstgebereinheit als Stellvertreterleitrechnereinheit bzw. Proxy agiert. Durch die Rolle der Stellvertreterleitrechnereinheit erfolgt die gesamte Kommunikation mit dem Client in beiden Richtungen zwischen diesem und der Stellvertreterleitrechnereinheit.

Besonders vorteilhaft erweist sich die erfindungsgemäße Anordnung auch bei einer Vorsehung zusätzlicher im Kommunikationssystem zu unterstützender Leistungsmerkmale. Diese häufig auftretende Update-Maßnahme berührt ebenfalls nur die Dienstgebereinheiten, während für die Dienstnehmereinheiten lediglich neue oder modifizierte abstrakte Kommunikationsdienstaufrufe hinzutreten.

Ein besonderer Vorteil der vorzugsweise in drei Schichten
- »3-Tier« - verwirklichten Architektur mit einer zwischen den Kommunikationsleitrechnern und der als Kommunikationsendgerät agierenden Dienstnehmereinheiten angeordneten - in der Dienstgebereinheit verwirklichten - Ebene ist eine lose Kopplung sowie eine einfache Einbindung der Kommunikationsdienste
- in Form sogenannter Web Services - in andere Applikationen, wobei diese Einbindung vorteilhaft sowohl unabhängig von der für die Applikation verwendeten Programmiersprache als auch unabhängig vom zur Ausführung der Dienstnehmereinheiten bzw. der Applikation vorgesehenen Betriebssystem ist.

Die Kommunikationsdienste sind in vorteilhafter Weise unabhängig von den im Kommunikationssystem existierenden bzw. koexistierenden Kommunikationsprotokollen und sind damit auch für einen Einsatz in Kommunikationssystemen mit heterogenen Kommunikationsprotokollen geeignet.

Vorteilhafte Weiterbildungen der Erfindung sind in den Unteransprüchen angegeben.

Ein Ausführungsbeispiel mit weiteren Vorteilen und Ausgestaltungen der Erfindung wird im folgenden anhand der Zeichnung näher erläutert.

Dabei zeigen:
- Fig. 1:: ein Strukturbild zur schematischen Darstellung von logischen Ebenen innerhalb eines erfindungsgemäßen Kommunikationssystems;
- Fig. 2:: ein Strukturbild zur schematischen Darstellung von innerhalb des Kommunikationssystems ausgetauschter Signalisierungs- und Nutzdaten sowie von Kommunikationsdienstaufrufen;
- Fig. 3:: ein chronologisches Ablaufbild zur schematischen Darstellung eines Austauschs von Signalisierungsund Steuernachrichten zum Aufbau einer Verbindung zwischen einer Dienstnehmereinheit und einer Kommunikationseinheit;
- Fig. 4:: ein chronologisches Ablaufbild zur schematischen Darstellung eines Austauschs von Signalisierungsund Steuernachrichten zum Aufbau einer Verbindung zwischen zwei Dienstnehmereinheiten;
- Fig. 5:: ein chronologisches Ablaufbild zur schematischen Darstellung eines Austauschs von Signalisierungsund Steuernachrichten zum Aufbau einer Verbindung zwischen einer Kommunikationseinheit und einer Dienstnehmereinheit;

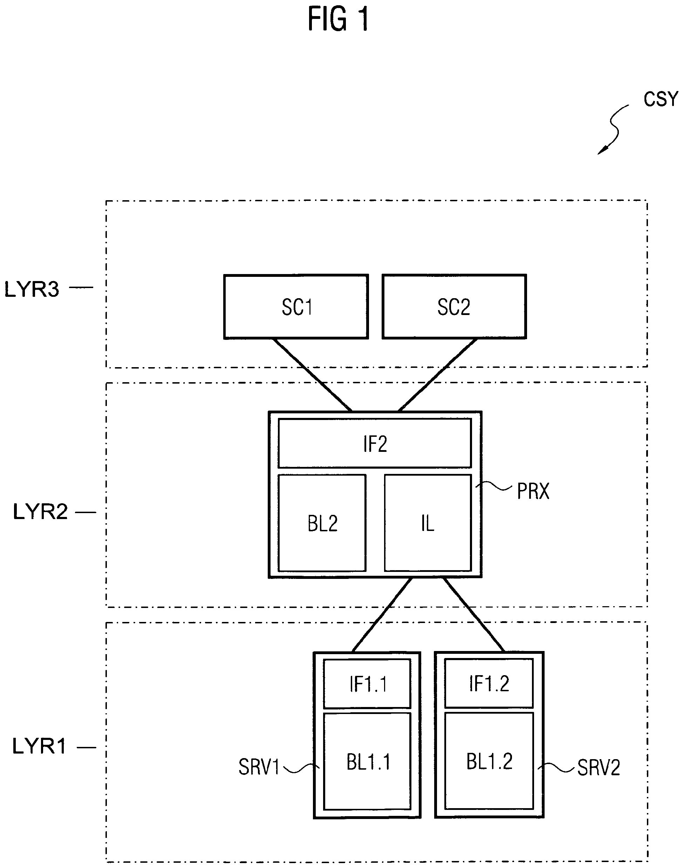

Fig. 1 zeigt ein in drei logische Ebenen LYR1,LYR2,LYR3 gegliedertes Kommunikationssystem CSY. Das Kommunikationssystem CSY wird umfasst von einem - nicht dargestellten - paketorientierten Netzwerk. Dies bedeutet, dass jede der im folgenden näher erläuterten Funktionskomponenten über die Möglichkeit eines paketorientierten Datenaustausch mit dem paketorientierten Netzwerk verfügt.

Ein einer ersten logischen Ebene LYR1 zugeordneter erster Leitrechner SRV1 verfügt - neben weiteren, nicht dargestellten Funktionseinheiten - über eine erste Verarbeitungseinheit BL1.1 sowie über eine erste Schnittstelle IF1.1. Ein ebenfalls der ersten logischen Ebene LYR1 zugeordneter, zweiter Leitrechner SRV2 verfügt in entsprechender Weise über eine zweite Verarbeitungseinheit BL1.2 sowie über eine zweite Schnittstelle IF1.2.

Ein einer zweiten logischen Ebene LYR2 zugeordnete Stellvertreterleitrechnereinheit, im folgenden auch mit Proxyserver PRX bezeichnet, ist mit der ersten Schnittstelle IF1.1 des ersten Leitrechners SRV1 sowie der zweiten Schnittstelle IF1.2 des zweiten Leitrechners SRV2 über das - nicht dargestellte - paketorientierte Netzwerk verbunden. In der Zeichnung wird diese »Verbindung« über ein paketorientiertes Netzwerk mit durchgezogenen Linien dargestellt. Eine solche »Verbindung« dient dabei lediglich der Anschauung einer Kommunikationsbeziehung über ein - seiner Natur nach an sich verbindungsloses - paketorientiertes Netzwerk.

Der Proxyserver PRX verfügt - neben weiteren, nicht dargestellten Funktionskomponenten - über eine Integrationseinheit IL, eine Verarbeitungseinheit BL2 sowie über eine Schnittstelle IF2.

Der Proxyserver PRX ist über seine Schnittstelle IF2 mit einem ersten und einem zweiten Kommunikationsendgerät SC1,SC2 verbunden. Das erste Kommunikationsendgerät SC1 und das zweite Kommunikationsendgerät SC2 sind einer dritten logischen Ebene LYR3 zugeordnet.

Zur Darstellung einer Interoperabilität mit verschieden Kommunikationsprotokollen wird im folgenden davon ausgegangen, das der erste Leitrechner SRV1 eine zentrale, gemäß des H.323-Kommunikationsprotokolls operierende Verwaltungsinstanz ist, welche in der Fachterminologie auch als »Gatekeeper« bekannt ist.

Der zweite Leitrechner SRV2 entspricht einer gemäß des SIP-Kommunikationsprotokolls operierende Verwaltungsinstanz. Im Falle des Kommunikationsprotokolls SIP ist diese Verwaltungsinstanz üblicherweise auf mehrere - nicht dargestellte - Einheiten wie einem SIP-Proxy-Server, einem Redirect-Server, einem Registrar und einem Location-Server unterteilt, während in der Zeichnung aus Übersichtsgründen von einer Einheit in Form des zweiten Leitrechners SRV2 ausgegangen wird.

Der erste Leitrechner SRV1 tauscht - über eine nicht dargestellte Schnittstelle - nach dem H.323-Kommunikationsstandard ausgestaltete Nachrichten mit H.323-kompatiblen - nicht dargestellten - Endgeräten aus. In analoger Weise tauscht der zweite Leitrechner SRV2 - über eine nicht dargestellte Schnittstelle - nach dem SIP-Kommunikationsstandard ausgestaltete Nachrichten mit SIP-kompatiblen - nicht dargestellten - Endgeräten aus.

An der ersten Schnittstelle IF1.1 des ersten Leitrechners SRV1 in Form von Datenpaketen ausgetauschte Nachrichten sind jedoch nicht gemäß des H.323-Kommunikationsstandards ausgestaltet. In analoger Weise sind die an der zweiten Schnittstelle IF1.2 des zweiten Leitrechners SRV2 ausgetauschten Nachrichten nicht gemäß des SIP-Kommunikationsstandards ausgestaltet. Die an der ersten bzw. zweiten Schnittstelle IF1.1,IF1.2 ausgetauschten Nachrichten werden nämlich in einem anderen, für die Integrationseinheit IL des Proxyservers PRX verarbeitbaren Format ausgetauscht, auf das später detailliert eingegangen wird.

Nach dieser Darstellung von Hardwarekomponenten zur Beschreibung des physikalischen Aufbaus des Kommunikationssystems CSY werden die in Fig. 1 dargestellten Funktionseinheiten im folgenden bezüglich Ihrer Funktion und Kommunikationsbeziehungen zueinander betrachtet. Die drei logischen Ebenen LYR1,LYR2,LYR3 definieren eine Organisationsform gemäß eines sogenannten »3-Tier«-Modells, in dem in Form von Hardware und/oder Software ausgeführte Einheiten miteinander Daten austauschen.

Zur strukturellen Betrachtung werden die vormals als Kommunikationsendgeräte bezeichneten Einheiten innerhalb der dritten logischen Ebene LYR3 als erster und zweiter Dienstnehmer SC1,SC2 eingeführt. Ein Dienstnehmer SC1,SC2 bzw. eine Dienstnehmereinheit SC1,SC2 wird in der Fachwelt oftmals auch als »Client« bezeichnet und verwirklicht Aufrufe von Funktionen, welche beispielsweise von einem sogenannten Dienstgeber bzw. Dienstgebereinheit - in der Fachwelt oftmals auch als »Server« bezeichnet - angeboten werden.

Die von den Dienstnehmereinheiten SC1,SC2 aufgerufenen Funktionen werden von der vormals als Proxyserver bezeichneten Dienstgebereinheit PRX vorgehalten. Für die Dienstnehmereinheiten SC1,SC2 agiert diese Dienstgebereinheit PRX somit als sogenannter »Service Provider«.

Auf Basis dieser Architektur des Kommunikationssystems CSY kann nun die Wirkungsweise der logischen Ebenen LYR1,LYR2,LYR3 wie folgt zusammengefasst werden:
- Die erste logische Ebene LYR1 bietet native Signalisierungsfunktionen von Kommunikationsprotokollen wie z.B. H.323 und SIP.
- Die zweite logische Ebene LYR2 abstrahiert diese nativen Signalisierungsfunktionen und bietet diese der dritten logischen Ebene LYR3 in Form von (VoIP-) Kommunikationsdiensten als sogenannte »Web Services« an.
- Die dritte logische Ebene LYR3 entspricht einer Client-Software. Auf Basis einer bereitgestellten Implementierung dieser Client-Software ist ein Entwickler in der Lage, eine VoIP-Lösung unter Nutzung der von der zweiten logischen Ebene LYR2 angebotenen Kommunikationsdienste zu implementieren. Dabei enthält die Client-Software nur die Funktionen, welche für die Clients, d.h. die Dienstnehmer SC1,SC2 unverzichtbar sind, wie z.B. die Handhabung eines Nutzdatenaustauschs und der dafür verwendeten Codec-Funktionen. Dienstnehmer SC1,SC2 nutzen die von der zweiten logischen Ebene LYR2 angebotenen Kommunikationsdienste zur Ausführung in eigenen Applikationen. Diese Applikationen sind beispielsweise in einem Kommunikationsendgerät oder auf einem Rechnersystem implementiert.

Der jeweilige Dienstnehmer SC1,SC2 sendet Anfragen für einen Verbindungsaufbau an den Dienstgeber PRX und erwartet eine Bestätigung oder eine Ablehnung dieser Anfrage. Diese Anfrage ist unabhängig von dem in der ersten logischen Ebene LYR1 verwendeten Kommunikationsprotokoll - SIP bzw. H.323 - zum eigentlichen Aufbau der Verbindung, sondern wird als Aufruf von Kommunikationsdiensten gestaltet. Dieser Aufruf von Kommunikationsdiensten ist protokollneutral und erfolgt beispielsweise auf Basis des XML-Standards (Extended Markup Language). Bei einer Bestätigung der Anfrage erhält der Dienstnehmer SC1,SC2 mit der Bestätigung Parameter wie Portnummer und Kodierverfahren, welche für den anschließenden - nicht dargestellten - Nutzdatenaustausch verwendet werden sollen.

Dieser Nutzdatenaustausch und eine zugehörige Medienverarbeitung ist von dem Signalisierungsdatenaustausch vollkommen getrennt.

Im folgenden werden unter weiterer Bezugnahme auf die Funktionseinheiten der Fig. 1 Kommunikationsverbindungen zwischen verschiedenen logischen Ebenen näher erläutert.

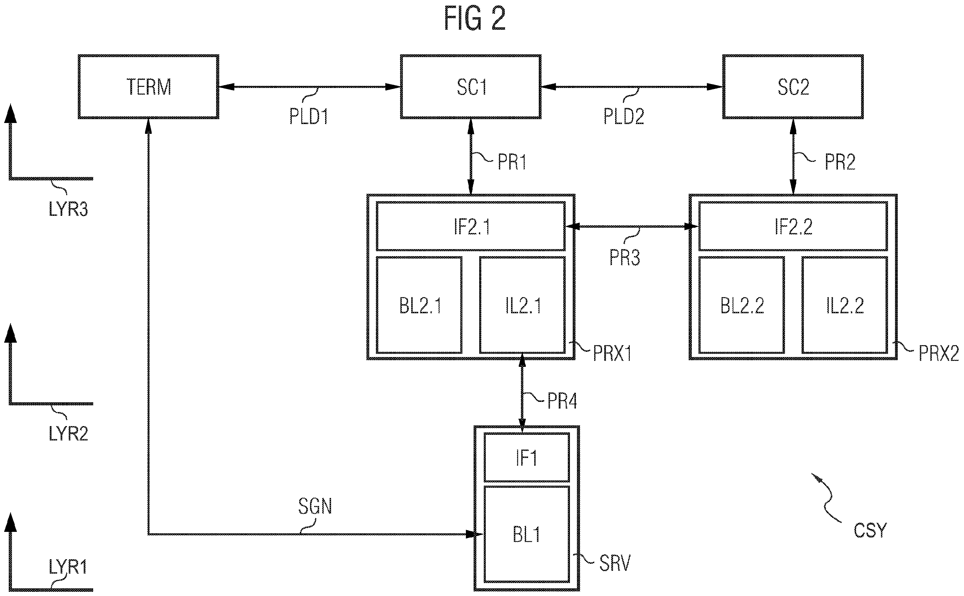

Fig. 2 zeigt einen Nachrichtenaustausch bzw. Funktionsaufrufe zwischen verschiedenen teilweise aus Fig. 1 bekannten Funktionseinheiten sowie den logischen Ebenen LYR1, LYR2, LYR3. Aus Übersichtlichkeitsgründen sind die logischen Ebenen LYR1, LYR2, LYR3 im Unterschied zur Darstellung der Fig. 1 lediglich durch Richtungspfeile symbolisiert.

Neben den Dienstnehmern SC1, SC2 ist eine weitere Kommunikationseinheit TERM in der dritten logischen Ebene TERM angeordnet.

Im Unterschied zur Fig. 1 ist im folgenden zu erläuternden Ausführungsbeispiel angenommen, dass in der zweiten logischen Ebene des Kommunikationssystems CSY zwei Dienstgebereinheiten PRX1, PRX2 sowie in der ersten logischen Ebene LYR1 nur ein Leitrechner SRV angeordnet sind. Der Leitrechner SRV ist beispielsweise als zentrale SIP-Verwaltungsinstanz ausgeführt.

Entsprechend ist die Kommunikationseinheit TERM als SIP-Kommunikationsendgerät ausgeführt und tauscht mit dem Leitrechner SRV auf Basis von nach dem SIP-Standard ausgestalteten Signalisierungsnachrichten SGN aus.

Als Kommunikationsteilnehmer des im folgenden zu beschreibenden Verfahren kommen insbesondere die Kommunikationseinheit TERM, der erste Dienstnehmer SC1 und der zweite Dienstnehmer SC2 in Betracht.

Im Falle einer bestehenden Kommunikationsverbindung zwischen der Kommunikationseinheit TERM und dem ersten Dienstnehmer SC1 werden Nutzdaten PLD1 direkt zwischen der Kommunikationseinheit TERM und dem ersten Dienstgeber SC1 ausgetauscht.

Ein analoger direkter Nutzdatenaustausch PLD2 erfolgt auch bei einer bestehenden Kommunikationsverbindung zwischen der ersten und der zweiten Dienstnehmereinheit SC1, SC2.

Die erste Dienstnehmereinheit SC1 ruft über einen ersten Dienstaufruf PR1 über die erste Schnittstelle IF2.1 des ersten Leitrechners PRX1 dessen Kommunikationsdienste bzw. Web-services auf.

In entsprechender Weise ruft die zweite Dienstnehmereinheit SC2 über einen zweiten Dienstaufruf PR2 Kommunikationsdienste des zweiten Leitrechners PRX2 auf.

Des weiteren erfolgt ein Datenaustausch zwischen Kommunikationsdiensten des ersten Leitrechners PRX1 und Kommunikationsdiensten des zweiten Leitrechners PRX2 über einen dritten Dienstaufruf PR3.

Die in der ersten logischen Ebene LYR1 lokalisierten Funktionseinheiten finden im erfindungsgemäß vorgesehenen Verfahren nur dann Anwendung, wenn eine rufender oder gerufener Kommunikationspartner ausschließlich über eines der unterstützten Kommunikationsprotokolle - im Ausführungsbeispiel SIP - anzusprechen ist.

Ein von der dritten logischen Ebene LYR3, beispielsweise durch den ersten Verbindungsnehmer SC1 initiierte Verbindungsaufbauanforderung mit der Kommunikationseinheit TERM wird in einem solchen Fall über die zweite logische Ebene LYR2 zur ersten logischen Ebene LYR1 geleitet, wobei notwendige Parameter innerhalb der Signalisierungsinformationen - z.B. Rufnummer und Eigenschaften des rufenden Teilnehmers - in entsprechenden Nachrichten bzw. Kommunikationsfunktionsaufrufen PR1,PR2 weitergereicht werden.

In der ersten logischen Ebene LYR1 werden anschließend zwischen der gerufenen Kommunikationseinheit TERM und dem Leitrechner SRV Signalisierungsnachrichten SGN ausgetauscht. Die Signalisierungsnachrichten SGN dienen zum Zeitpunkt eines Aufbaus der Kommunikationsverbindung u.a. einer Absprache, auf welchem Port und mit welchem Codec die einzurichtende Kommunikation erfolgen soll. Nach dem Abschluss dieser Signalisierungsphase wird eine Bestätigung über einen erfolgten Verbindungsaufbau sowie diese begleitende Ergebnisparameter zur Sprachübertragung und Kontrolle der Kommunikationsverbindung über die zweite logische Ebene LYR2 und an die dritte logische Ebene LYR3 zurückgegeben.

Aus der Sicht der gerufenen Kommunikationseinheit TERM entspricht der Nachrichtenaustausch in der logischen Ebene LYR1 einer Kommunikation einem SIP-Proxy-Server bzw. in einer alternativen Ausführungsform mit einem H.323-Gatekeeper, je nachdem, welches der beiden Kommunikationsprotokolle zum Austausch von Signalisierungsnachrichten mit der Kommunikationseinheit TERM verwendet wurde.

Aus der Sicht des rufenden ersten Dienstnehmers SC1 in der dritten logischen Ebene LYR3 bleibt dieser Nachrichtenaustausch verborgen. In dieser Ebene LYR3 werden nur abstrahierte Kommunikationsdienste PR1 aufgerufen und über diese Dienste PR1 Parameter zurückgegeben.

Ist der gerufene Kommunikationspartner stattdessen ebenso wie der rufende Kommunikationspartner in der dritten logischen Ebene LYR3 angeordnet, also beispielsweise bei einem Verbindungswunsch zwischen dem ersten und dem zweiten Dienstnehmer SC1,SC2, findet der Verbindungsaufbau direkt auf der zweiten logischen Ebene LYR2 statt.

Die in der zweiten logischen Ebene LYR2 angeordneten Dienstgebereinheit PRX1,PRX2 handhaben hierzu alle für den Aufbau der Verbindung notwendigen Schritte und zugehörige Parameter wie z.B. die Anfrage für den Verbindungsaufbau, eine Abfrage der Kapazitäten, Bestätigung der Anfrage usw.

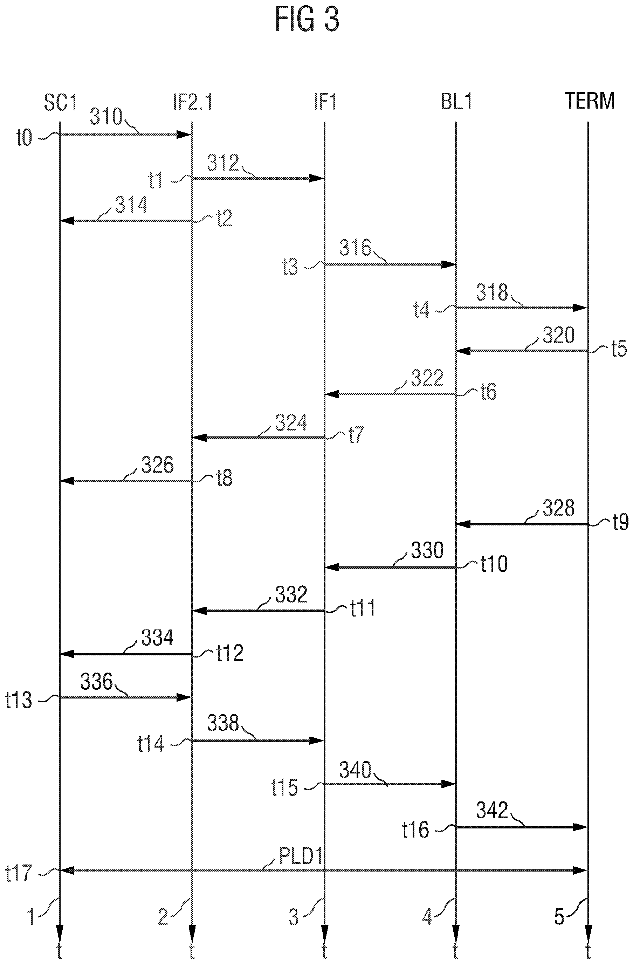

In Fig. 3 wird unter weiterer Bezugnahme auf die Funktionseinheiten der Fig. 2 ein chronologisches Ablaufbild zur schematischen Darstellung eines Austauschs von Signalisierungs- und Steuernachrichten bei einem Aufbau einer Verbindung zwischen der rufenden ersten Dienstnehmereinheit SC1 und der gerufenen Kommunikationseinheit TERM gezeigt.

Zeitstrahlen 1,2,3,4 und 5 sind in dieser Reihenfolge der ersten Dienstnehmereinheit SC1, der zweiten Schnittstelle IF2.1 der ersten Dienstgebereinheit PRX1, der ersten Schnittstelle IF1 des Kommunikationsleitrechners SRV, der ersten Verarbeitungseinheit des Kommunikationsleitrechners SRV, sowie der Kommunikationseinheit TERM zugeordnet. Die Zeitstrahlen 1,2,3,4 und 5 verlaufen von oben nach unten, so dass spätere Zeitpunkte t weiter unten liegen als frühere Zeitpunkte t.

Zu einem Zeitpunkt t0 ruft die erste Dienstnehmereinheit SC1 einen Kommunikationsdienst »CALL« zum Aufbau einer Verbindung mit einem in Parametern zu spezifizierenden Kommunikationspartner auf. Dieser Aufruf wird über eine weitere Parameter enthaltende Anforderungsmeldung 310 von der Dienstnehmereinheit SC1 an die zugeordnete erste Dienstgebereinheit PRX1 gesendet und von der ersten Schnittstelle IF2.1 der ersten Dienstgebereinheit PRX1 in Empfang genommen. Da in der ersten Dienstgebereinheit PRX1 auf der zweiten logischen Ebene LYR2 bereits durch eine voraus erfolgte Registrierung der Dienstnehmereinheit SC1 bekannt ist, welche Kodierverfahren - Codecs - die Dienstnehmereinheit SC1 benutzt bzw. eine bevorzugte Reihenfolge zu deren Anwendung, ist eine Angabe dieser Parameter durch die Dienstnehmereinheit SC1 in der voraus erfolgten Anforderungsmeldung 310 nicht notwendig und muss nicht bei jedem Methodenaufruf extra angegeben werden.

Die Dienstgebereinheit PRX1 nimmt die mit der Anforderungsmeldung 310 gesendete Anforderung eines Dienstaufrufs entgegen, verarbeitet in der Anforderungsmeldung 310 enthaltene Parameter und generiert zu einem Zeitpunkt t1 eine weitere an die erste logische Ebene LYR1 gerichtete Anforderungsnachricht 312, welche an der ersten Schnittstelle IF1 des SIP-Leitrechners SRV entgegengenommen wird. Diese Anforderungsnachricht 312 enthält eine den aktuellen Verbindungswunsch identifizierende Verbindungsidentifikationsnummer, welche auch als »Call ID« bezeichnet wird und welche von der Dienstgebereinheit PRX1 zugewiesen wird.

Zu einem Zeitpunkt t2 wird von der ersten Schnittstelle IF2.1 der ersten Dienstgebereinheit PRX1 eine Bestätigungsmeldung 312 an die erste Dienstnehmereinheit übermittelt, welche fachüblich auch als »Acknowledge«-Nachricht 314 bezeichnet wird. Diese von der ersten Dienstgebereinheit PRX1 über die erste Schnittstelle IF2.1 gesendete Bestätigungsmeldung 314 meldet eine laufende Bearbeitung des mit der Anforderungsmeldung 310 initiierten Verbindungsaufbaus.

Auf der nun folgenden Bearbeitung in der ersten logischen Ebene LYR1 werden nun alle mit der Anforderungsmeldung 312 empfangenen Parameter aus dieser entnommen und in eine gängige SIP-Einladungsanforderung, welche auch als »SIP INVITE Request« bezeichnet wird, umgeformt. Anschließend wird ein SIP-Sitzungsaufbau gestartet.

Zu einem Zeitpunkt t3 wird diese SIP-Einladungsanforderung in Form einer Einladungsnachricht 316, welche auch als »INVITE«-Nachricht 316 bezeichnet wird, durch die erste Schnittstelle IF1 des Leitrechners SRV auf Basis der Anforderungsmeldung 312 und unter Verwendung der darin enthaltenen Parameter generiert und an die erste Verarbeitungseinheit BL1 des Leitrechners SRV übergeben. Analog zu den vorherigen Ausführungen über die verteilte Natur des SIP-Leitrechners SRV ist auch hier anzumerken, dass in einer alternativen Ausführungsform die erste Verarbeitungseinheit BL1, die konvertierende erste Schnittstelle IF1 sowie der SIP-Leitrechner SRV in verteilten Systemen verwirklicht sind, welche über das - nicht dargestellte - paketorientierte Netzwerk miteinander kommunizieren.

Zu einem Zeitpunkt t4 wird von der ersten Bearbeitungseinheit BL1 ein SIP-Sitzungsaufbau gestartet und eine Einladungsnachricht 318, welche auch als »INVITE«-Nachricht 318 an die Kommunikationseinheit TERM gesendet. Die erste Verarbeitungseinheit BL1 übernimmt gegenüber der Kommunikationseinheit die Rolle eines »SIP Proxy«. Die Kommunikationseinheit TERM ist im vorliegenden Ausführungsbeispiel als sogenannter »SIP U-ser-Agent« ausgeführt.

Zu einem Zeitpunkt t5 wird von der ersten Kommunikationseinheit TERM eine Signalisierungsmeldung 320 an die erste Bearbeitungseinheit BL1 gesendet. Die Signalisierungsmeldung 320 meldet nach einer erfolgreichen Überprüfung einer Bereitschaft der Kommunikationseinheit TERM für eine Entgegennahme des Verbindungswunsches eine erfolgte Signalisierung des Verbindungswunsches, welche in konventionellen Kommunikationseinheiten üblicherweise mit einer Rufsignalisierung erfolgt. Bei einer im Ausführungsbeispiel bevorzugten Realisierung der Kommunikationseinheit in Form einer Softwareapplikation sind neben einer akustischen Signalisierung eine Vielzahl anderer Signalisierungsformen zur Anzeige eines eingehenden Verbindungswunsches implementierbar. Die Signalisierungsmeldung 320 wird in der SIP-Terminologie in Anlehnung an konventionelle Signalisierungsformen auch mit »Ringing« bezeichnet. Gemäß der SIP-Konventionen ist diese Signalisierungsmeldung mit einer Kennzahl »180« kategorisiert.

Zu einem Zeitpunkt t6 wird die von der ersten Bearbeitungseinheit BL1 empfangene Signalisierungsmeldung 320 in Form einer weiteren Signalisierungsmeldung 322 an die erste Schnittstelle IF1 weitergeleitet. Optional wird die vorausgehende Signalisierungsmeldung 320 vor einer Weiterleitung in Form der Signalisierungsmeldung 322 in einigen enthaltenen Parametern durch die erste Bearbeitungseinheit BL1 modifiziert.

Zu einem Zeitpunkt t7 wird durch die erste Schnittstelle IF1 eine Signalisierungsmeldung 324 an die auf der zweiten logischen Ebene LYR2 lokalisierte zweite Schnittstelle IF2.1 gesendet, in welcher in einem SIP-Format enthaltene Daten der vorausgehenden Signalisierungsmeldung 322 in ein von der zweiten Schnittstelle IF2.1 erwartetes Format, beispielsweise XML, umgeformt sind. Die Signalisierungsmeldung 324 wird nun in der Dienstgebereinheit PRX bearbeitet und dem zuvor gestarteten Kommunikationsdienst unter Verwendung der ermittelten Call ID zugeordnet.

Schließlich erfolgt zu einem Zeitpunkt t8 in Form einer Signalisierungsmeldung 326 eine Rückmeldung des aufgerufenen Kommunikationsdienstes über eine erfolgte Signalisierung an der gerufenen Kommunikationseinheit TERM an die rufende ersten Dienstnehmereinheit SC1.

Nimmt ein Teilnehmer der gerufenen Kommunikationseinheit TERM den Verbindungswunsch entgegen, so werden zu den Zeitpunkten t9,...,t12 jeweils Bestätigungsmeldungen 328,330,...,334 von der Kommunikationseinheit TERM an die ersten Dienstnehmereinheit SC1 gesendet. Dabei wird in analoger Weise die erste in einem SIP-Format aufgebaute - in der SIP-Terminologie auch mit »OK« bezeichnete und gemäß der SIP-Konventionen mit einer Kennzahl »200« kategorisierte - Bestätigungsmeldung 328 schließlich als eine Rückmeldung des aufgerufenen Kommunikationsdienstes in Form der Betätigungsnachricht 334 an der ersten Dienstnehmereinheit SC1 entgegengenommen. Wird der Verbindungsaufbau von der gerufenen Kommunikationseinheit abgelehnt, ist ein Grund für die Ablehnung in der - in diesem Falle negativen - Bestätigungsmeldung 334, welche in einem XML-Format an den ersten Dienstnehmer SC1 übermittelt wird, enthalten.

Trifft eine positive Bestätigungsmeldung 334 am ersten Dienstnehmer SC1 ein, werden in analoger Weise zu den Zeitpunkten t13,...,t16 jeweils rückwärtige Bestätigungsmeldungen 336,338,...,342 von der ersten Dienstnehmereinheit SC1 an die Kommunikationseinheit TERM gesendet. Die erste Bestätigungsmeldung 336 in einem XML-Format wird vom ersten Dienstnehmer SC1 gesendet, wenn dieser mit der Kommunikationsverbindung einverstanden ist.

Im Anschluss daran wird zwischen dem ersten Dienstnehmer SC1 und der gerufenen Kommunikationseinheit TERM eine direkte Nutzdatenverbindung PLD1 aufgebaut.

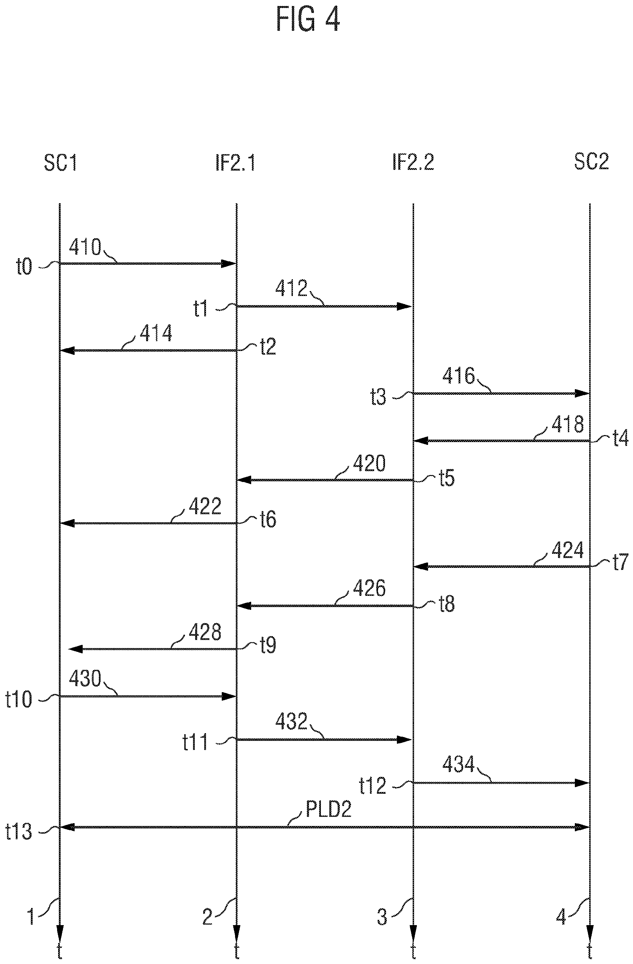

Fig. 4 zeigt unter weiterer Bezugnahme auf die Funktionseinheiten der Fig. 2 ein chronologisches Ablaufbild zur schematischen Darstellung eines Austauschs von Signalisierungs- und Steuernachrichten bei einem Aufbau einer Verbindung zwischen der rufenden ersten Dienstnehmereinheit SC1 und der gerufenen zweiten Dienstnehmereinheit SC2.

Zeitstrahlen 1,2,3 und 4 sind in dieser Reihenfolge der ersten Dienstgebereinheit SC1, der zweiten Schnittstelle IF2.1 der ersten Dienstgebereinheit PRX1, der zweiten Schnittstelle IF2.2 der zweiten Dienstgebereinheit PRX2 sowie der Kommunikationseinheit TERM zugeordnet. Die Zeitstrahlen 1,2,3 und 4 verlaufen von oben nach unten, so dass spätere Zeitpunkte t weiter unten liegen als frühere Zeitpunkte t.

Soll wie im vorliegenden Ausführungsbeispiel eine Kommunikationsverbindung zwischen zwei Dienstnehmereinheiten SC1,SC2 aufgebaut werden, werden Funktionseinheiten der ersten logischen Ebene LYR1 nicht benötigt. Aus der Sicht der rufenden Dienstnehmereinheit SC1 erfolgt die Kommunikation mit der zweiten logischen Ebene LYR2 identisch zum Ausführungsbeispiel anhand der Fig. 4.

Zu einem Zeitpunkt t0 ruft die erste Dienstnehmereinheit SC1 einen Kommunikationsdienst »CALL« zum Aufbau einer Verbindung mit einem in Parametern zu spezifizierenden Kommunikationspartner auf. Dieser Aufruf wird über eine weitere Parameter enthaltende Anforderungsmeldung 410 von der Dienstnehmereinheit SC1 an die zugeordnete erste Dienstgebereinheit PRX1 gesendet und von der ersten Schnittstelle IF2.1 der ersten Dienstgebereinheit PRX1 in Empfang genommen. Da in der ersten Dienstgebereinheit PRX1 auf der zweiten logischen Ebene LYR2 bereits durch eine voraus erfolgte Registrierung der Dienstnehmereinheit SC1 bekannt ist, welche Kodierverfahren - Codecs - die Dienstnehmereinheit SC1 benutzt bzw. eine bevorzugte Reihenfolge für deren Anwendung, ist eine Angabe dieser Parameter durch die Dienstnehmereinheit SC1 in der voraus erfolgten Anforderungsmeldung 410 nicht notwendig und muss nicht bei jedem Methodenaufruf extra angegeben werden.

Die Dienstgebereinheit PRX1 nimmt die mit der Anforderungsmeldung 410 gesendete Anforderung eines Dienstaufrufs entgegen und verarbeitet in der Anforderungsmeldung 410 enthaltene Parameter. Anhand eines übersandten Parameters zur Identifikation des gerufenen Kommunikationsteilnehmers, der zweiten Dienstnehmereinheit SC2 ist für die Dienstgebereinheit PRX1 insbesondere ersichtlich, dass der gerufene Teilnehmer ebenso wie der rufende Teilnehmer der dritten logischen Ebene LYR3 zugehörig ist.

Daraufhin wird zum Zeitpunkt t1 eine Anforderungsmeldung 412 zum Aufruf eines Kommunikationsdienstes auf dem der zweiten Dienstnehmereinheit SC2 zugehörigen Dienstgebereinheit PRX2 gesendet. Diese Anforderungsmeldung 412 enthält für die Kommunikationsverbindung notwendige Parameter und wird von der ersten Schnittstelle IF2.1 der ersten Dienstgebereinheit PRX1 an die zweite Schnittstelle IF2.2 der zweiten Dienstgebereinheit PRX2 gesendet.

Zu einem Zeitpunkt t2 wird von der ersten Schnittstelle IF2.1 der ersten Dienstgebereinheit PRX1 eine Bestätigungsmeldung 414 an die erste Dienstnehmereinheit SC1 übermittelt, welche fachüblich auch als »Acknowledge«-Nachricht 414 bezeichnet wird. Diese von der ersten Dienstgebereinheit PRX1 über die erste Schnittstelle IF2.1 gesendete Bestätigungsmeldung 414 meldet eine laufende Bearbeitung des mit der Anforderungsmeldung 410 initiierten Verbindungsaufbaus.

Zu einem Zeitpunkt t3 wird von der zweiten Schnittstelle IF2.2 der zweiten Dienstgebereinheit PRX2 eine Anforderungsmeldung 416 an die zweite Dienstnehmereinheit SC2 gesendet. Diese Anforderungsmeldung 416 weist eine XML-Struktur auf und gibt die mit der Anforderungsmeldung 410 initiierte Aufforderung zum Aufbau einer Kommunikationsverbindung bzw. »Call Request« direkt an die zweite Dienstnehmereinheit SC2, optional unter Hinzufügung weiterer administrativer Parameter durch die Dienstgebereinheiten PRX1, PRX2 weiter.

Zu den Zeitpunkten t4,t5,t6 gesendete Signalisierungsmeldungen 418,420,422 melden nach einer erfolgreichen Überprüfung einer Bereitschaft der zweiten Dienstnehmereinheit SC2 für eine Entgegennahme des Verbindungswunsches eine erfolgte Signalisierung des Verbindungswunsches, welche in konventionellen Kommunikationseinheiten mit einer Rufsignalisierung erfolgt. Aus diesem Grund werden die Signalisierungsmeldungen 418,420,422 auch mit »Ringing« bezeichnet.

Nimmt ein Teilnehmer der gerufenen zweiten Dienstnehmereinheit SC2 den Verbindungswunsch entgegen, so werden zu den Zeitpunkten t7,t8,t9 jeweils Bestätigungsmeldungen 424,426,428 von der zweiten Dienstnehmereinheit SC2 an die ersten Dienstnehmereinheit SC1 gesendet. Dabei wird in analoger Weise die erste in einem XML-Format aufgebaute - auch mit »OK« bezeichnete - Bestätigungsmeldung 424 schließlich als eine Rückmeldung des aufgerufenen Kommunikationsdienstes in Form der Betätigungsnachricht 428 an der ersten Dienstnehmereinheit SC1 entgegengenommen. Wird der Verbindungsaufbau von der gerufenen zweiten Dienstnehmereinheit SC2 abgelehnt, ist ein Grund für die Ablehnung in der - in diesem Falle negativen - Bestätigungsmeldung 428 enthalten.

Trifft eine positive Bestätigungsmeldung 428 am ersten Dienstnehmer SC1 ein, werden in analoger Weise zu den Zeitpunkten t10, t11, t12 jeweils rückwärtige Bestätigungsmeldungen 430,432,434 von der ersten Dienstnehmereinheit SC1 an die zweite Dienstnehmereinheit SC2 gesendet.

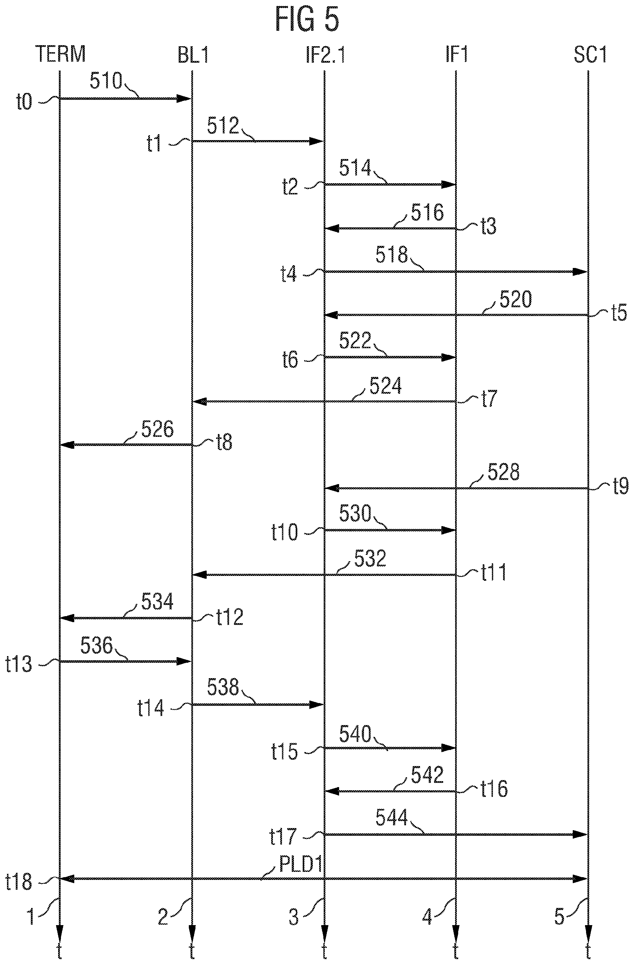

In Fig. 5 wird unter weiterer Bezugnahme auf die Funktionseinheiten der Fig. 2 ein chronologisches Ablaufbild zur schematischen Darstellung eines Austauschs von Signalisierungs- und Steuernachrichten bei einem Aufbau einer Verbindung zwischen der rufenden Kommunikationseinheit TERM und der gerufenen ersten Dienstnehmereinheit SC1 gezeigt.

Es wird anhand des gemäß der Fig. 5 dargestellten Ausführungsbeispiels abermals davon ausgegangen, dass die rufende Kommunikationseinheit TERM für einen Nachrichtenaustausch anhand des SIP-Kommunikationsprotokolls vorgesehen ist. Das im Kommunikationssystem CSY vorliegende Kommunikationsprotokoll, insbesondere SIP oder H.323, hat jedoch grundsätzlich keinen Einfluss auf eine erfolgreiche Durchführung des erfindungsgemäßen Verfahrens. Insbesondere ist das erfindungsgemäße Verfahren auch im Fall mehrerer unterschiedlicher Kommunikationsprotokolle realisierbar, wie bereits anhand der Darstellung zur Fig. 1 deutlich gemacht wurde.

Zeitstrahlen 1,2,3,4 und 5 sind in dieser Reihenfolge der Kommunikationseinheit TERM, der dem SIP-Kommunikationsleitrechner SRV zugeordneten ersten Ausführungseinheit BL1, der der ersten Dienstgebereinheit PRX1 zugeordneten ersten Schnittstelle IF2.1, der dem SIP-Kommunikationsleitrechner SRV zugeordneten ersten Schnittstelle IF1, sowie der ersten Dienstgebereinheit SC1 zugeordnet. Die Zeitstrahlen 1,2,3,4 und 5 verlaufen von oben nach unten, so dass spätere Zeitpunkte t weiter unten liegen als frühere Zeitpunkte t.

Zu einem Zeitpunkt t0 sendet die erste Kommunikationseinheit TERM ein Anforderungsnachricht 510 in einem SIP-Format zum Aufbau einer Verbindung mit Kommunikationspartner, welche auch als »SIP INVITE« bezeichnet wird. Diese Anforderungsnachricht wird von der Kommunikationseinheit TERM an dessen zugeordneten SIP-Leitrechner SRV gesendet und von dessen Bearbeitungseinheit BL1 in Empfang genommen. Die Bearbeitungseinheit übernimmt die Rolle eines SIP-Proxies. Der in der Anforderungsnachricht 510 mit Parametern spezifizierte Kommunikationspartner, nämliche die erste Dienstnehmereinheit SC1, wird nicht von der Bearbeitungseinheit BL1 des SIP-Kommunikationsleitrechners SRV verwaltet, daher wird die Anforderungsnachricht 510 von diesem zum Zeitpunkt t1 in Form der weitgehend unveränderten Bearbeitungsnachricht 512 an die zweite logische Ebene LYR2, genauer an die erste Schnittstelle IF2.1 der dortigen Dienstgebereinheit PRX1 weitergeleitet.

Aus der Sicht der ersten Dienstnehmereinheit SC1 agieren Funktionseinheit in der zweiten logischen Ebene LYR2 mit der ersten Schnittstelle IF2.1 wie ein Proxy, d.h. alle im folgenden beschriebenen bidirektionalen Signalisierungsnachrichten verlaufen über diese Ebene LYR2.

Zu einem Zeitpunkt t2 wird die zuvor erhaltene Anforderungsnachricht 512 über die erste Schnittstelle IF2.1 des Kommunikationsleitrechners PRX1 an die Schnittstelle IF1 des SIP-Kommunikationsleitrechners SRV weitergeleitet. Diese Weiterleitung erfolgt als Anhang einer Nachricht, welche ansonsten in einem für die Kommunikation zwischen diesen beiden Schnittstellen IF2.1, IF1 vorgesehenen Formatierung erfolgt, also z.B. in einem XML-Format.

In der ersten logischen Ebene LYR1 wird anhand dieses Anhangs der Nachricht 514 eine »SIP INVITE«-Anforderung, mithin eine Einladungsanforderung im Kommunikationsprotokoll SIP, erkannt und sendet zum Zeitpunkt t3 über die Schnittstelle IF1 an die erste Schnittstelle IF2.1 des Kommunikationsleitrechners PRX1 eine Anforderungsnachricht 516 im Format XML zum Aufruf eines Kommunikationsdienstes »CALL«.
In der Dienstgebereinheit PRX1 auf der zweiten logischen Ebene LYR2 wird ein Kommunikationsdienstaufruf - ein sogenannter Call-Request - für die verwaltete Dienstnehmereinheit SC1 erkannt, woraufhin zum Zeitpunkt t4 eine entsprechende Anforderungsmeldung 518 in einem XML-Format von der ersten Schnittstelle IF2.1 des Kommunikationsleitrechners PRX1 an die erste Dienstnehmereinheit SC1 gesendet wird.

Bevor sich ein Bediener oder eine Softwareapplikation für eine Entgegennahme der durch die Anforderungsmeldung 518 angeforderten Kommunikationsverbindung entscheidet, wird zum Zeitpunkt t5 eine - auch mit »Ringing« bezeichnete - Signalisierungsmeldung 520 an die erste Schnittstelle IF2.1 des Kommunikationsleitrechners PRX1 gesendet.

Zum Zeitpunkt t6 wird diese Signalisierungsmeldung 520 in Form einer weitergeleiteten Signalisierungsmeldung 522 an die erste logische Ebene LYR1 bzw. an die Schnittstelle IF1 weitergereicht.

Die an der ersten Schnittstelle IF1 erhaltene Signalisierungsmeldung 522 wird ausgewertet und eine entsprechende - gemäß der SIP-Konventionen mit einer Kennzahl »180« kategorisierte - SIP-Signalisierungsmeldung 524 an die als SIP-Proxy agierende Bearbeitungseinheit BL1 übergeben.

Zu einem Zeitpunkt t8 wird diese SIP-Signalisierungsmeldung 524 in Form einer weiteren SIP-Signalisierungsmeldung 526 von der Bearbeitungseinheit BL1 an die SIP-Kommunikationseinheit TERM weitergereicht.

Nimmt ein Teilnehmer der gerufenen ersten Dienstnehmereinheit SC1 den Verbindungswunsch entgegen, so werden im folgenden zu den Zeitpunkten t9,...,t12 jeweils Bestätigungsmeldungen 528,530,...,534 von der ersten Dienstnehmereinheit SC1 an die Kommunikationseinheit TERM gesendet. Die zu den Zeitpunkten t9,...,t12 ausgetauschten Bestätigungsmeldungen 528,...,534 entsprechen in gegenläufiger Richtung den aus Fig. 3 bekannten ausgetauschten Bestätigungsmeldungen 328,...,334 mit dem Unterschied, dass die Nachrichten ausschließlich über die als Proxy agierende Schnittstelle IF2.1 in der zweiten logischen Ebene LYR2 geleitet werden.

Dabei wird zum Zeitpunkt t9 ein erster eine Entgegennahme der Verbindung bestätigender Aufruf eines Kommunikationsdienstes - »Response« bzw. »OK« - in Form der Bestätigungsmeldung 528 zunächst an die als Proxy in der zweiten logischen Ebene LYR2 agierende Schnittstelle IF2.1 gesendet, die diese Bestätigungsmeldung 528 zum Zeitpunkt t10 in Form der Bestätigungsmeldung 530 an die Schnittstelle IF1 übergibt. Die an der ersten Schnittstelle IF1 erhaltene Bestätigungsmeldung 530 wird ausgewertet und eine entsprechende - in der SIP-Terminologie auch mit »OK« bezeichnete und gemäß der SIP-Konventionen mit einer Kennzahl »200« kategorisierte - SIP-Bestätigungsmeldung 532 an die als SIP-Proxy agierende Bearbeitungseinheit BL1 übergeben, von wo aus diese zum Zeitpunkt t12 schließlich als eine SIP-Bestätigungsnachricht 534 der SIP-Kommunikationseinheit TERM übergeben wird.

Trifft eine positive Bestätigungsmeldung 534 an der SIP-Kommunikationseinheit TERM ein, werden in analoger Weise zu den Zeitpunkten t13,...,t17 jeweils rückwärtige Bestätigungsmeldungen 536,538,...,544 von der SIP-Kommunikationseinheit TERM an die ersten Dienstnehmereinheit SC1 gesendet.

## Patentansprüche

1. Anordnung zur Steuerung von Kommunikationsverbindungen in einem paketorientierten Kommunikationssystem (CSY), umfassend
- mindestens einen Kommunikationsleitrechner (SRV1, SRV2) zur Steuerung von Kommunikationsverbindungen auf Basis von ausgetauschten Signalisierungsnachrichten eines jeweils voreingestellten Kommunikationsprotokolls;
**dadurch gekennzeichnet, dass** das Kommunikationssystem (CSY) weiterhin umfasst
- mindestens eine als Stellvertreterleitrechnereinheit und somit als Proxyserver ausgebildete Dienstgebereinheit (PRX1, PRX2) zur Bereitstellung von verbindungsaufbauenden und -steuernden Kommunikationsdiensten auf Basis von bidirektionalen Kommunikationsdienstaufrufen mit mindestens einer Dienstnehmereinheit (SC1, SC2), wobei die rufende Dienstnehmereinheit (SC1) der mindestens einen Dienstnehmereinheit (SC1, SC2) bei der zugehörigen Dienstgebereinheit (PRX1) voraus registrierbar ist;
wobei in der mindestens einen Dienstgebereinheit (PRX1, PRX2) vorgesehen ist:
- Schnittstellen zu der mindestens einen Dienstnehmereinheit (SC1, SC2) sowie zu dem mindestens einen Kommunikationsleitrechner (SRV1, SRV2), der die Signalisierungsnachricht zwischen den jeweils voreingestellten Kommunikationsprotokollen umwandelt;
- Mittel zur Charakterisierung einer erhaltenen Signalisierungsnachricht und zur Entnahme von in der Signalisierungsnachricht enthaltenen Parametern und zur Zuordnung zu einem Kommunikationsdienst;
- Mittel zur Erzeugung mindestens einer Signalisierungsnachricht in Folge eines Kommunikationsdienstaufrufs der mindestens einen Dienstnehmereinheit (SC1, SC2);
- wobei die mindestens eine Dienstnehmereinheit (SC1, SC2) einen Kommunikationsdienst auf der Basis eines Web-Services über einen von dem voreingestellten Kommunikationsprotokoll unabhängigen Kommunikationsdienstaufruf aufruft; und
- wobei die zugehörige Dienstgebereinheit (PRX1, PRX2) eine von dem voreingestellten Kommunikationsprotokoll unabhängige Anforderungsmeldung mit den Parametern an den mindestens einen Kommunikationsleitrechner (SRV1, SRV2) sendet.

2. Anordnung nach Anspruch 1,
**gekennzeichnet durch**,
eine Dienstgebereinheit (PRX1, PRX2), welche als Stellvertreterleitrechnereinheit für die Kommunikation zwischen der mindestens einen Dienstnehmereinheit (SC1, SC2) und dem mindestens einen Kommunikationsleitrechner (SRV1, SRV2) ausgestaltet ist.

3. Anordnung nach einem der Ansprüche 1 bis 2,
**gekennzeichnet durch**,
eine aus einer Sequenz mehrerer Signalisierungseinzelnachrichten bestehende Signalisierungsnachricht.

4. Anordnung nach einem der vorhergehenden Ansprüche,
**gekennzeichnet durch**,
eine Ausgestaltung mindestens eines Kommunikationsleitrechner (SRV1, SRV2) für einen Austausch von Signalisierungsnachrichten nach dem SIP-Protokoll.

5. Anordnung nach einem der vorhergehenden Ansprüche,
**gekennzeichnet durch**,
eine Ausgestaltung mindestens eines Kommunikationsleitrechners (SRV1, SRV2) für einen Austausch von Signalisierungsnachrichten nach dem H.323-Protokoll.

6. Anordnung nach einem der vorhergehenden Ansprüche,
**gekennzeichnet durch**,
einen nach einem erfolgten Aufbau einer Kommunikationsverbindung direkten Austausch von Nutzdaten zwischen den Dienstnehmereinheiten (SC1, SC2) und/oder zwischen mindestens einer Dienstnehmereinheit (SC1, SC2) und einer dem Kommunikationsleitrechner (SRV1, SRV2) zugeordneten Kommunikationseinheit (TERM).

7. Verfahren zur Steuerung von Kommunikationsverbindungen in einem paketorientierten Kommunikationssystem (CSY), umfassend
- mindestens einen Kommunikationsleitrechner (SRV1, SRV2) zur Steuerung von Kommunikationsverbindungen auf Basis von ausgetauschten Signalisierungsnachrichten eines jeweils voreingestellten Kommunikationsprotokolls;
**dadurch gekennzeichnet, dass** das Kommunikationssystem (CSY) weiterhin umfasst
- mindestens eine als Stellvertreterleitrechnereinheit und somit als Proxyserver ausgebildete Dienstgebereinheit (PRX1, PRX2) zur Bereitstellung von verbindungsaufbauenden und -steuernden Kommunikationsdiensten auf Basis von bidirektionalen Kommunikationsdienstaufrufen mit mindestens einer Dienstnehmereinheit (SC1, SC2), wobei die rufende Dienstnehmereinheit (SC1) der mindestens einen Dienstnehmereinheit (SC1, SC2) bei der zugehörigen Dienstgebereinheit (PRX1) voraus registrierbar ist;
wobei in der mindestens einen Dienstgebereinheit (PRX1, PRX2) folgende Schritte vorgesehen sind:
a) Austausch mindestens einer Signalisierungsnachricht an einer Schnittstelle zu dem mindestens einen Kommunikationsleitrechner (SRV1, SRV2), der die Signalisierungsnachricht zwischen den jeweils voreingestellten Kommunikationsprotokollen umwandelt;
• wobei Charakterisierung und Entnahme von in einer erhaltenen Signalisierungsnachricht enthaltenen Parametern und Zuordnung zu einem über eine mindestens einer Dienstnehmereinheit (SC1, SC2) zugeordneten Schnittstelle verfügbaren Kommunikationsdienst erfolgt;
b) Austausch von Kommunikationsdienstaufrufen mit dem mindestens einen Kommunikationsleitrechner (SRV1, SRV2);
• wobei Erzeugung mindestens einer Signalisierungsnachricht in Folge eines Kommunikationsdienstaufrufs der mindestens einer Dienstnehmereinheit (SC1, SC2) erfolgt;
• wobei die mindestens eine Dienstnehmereinheit (SC1, SC2) einen Kommunikationsdienst auf der Basis eines Web-Services über einen von dem voreingestellten Kommunikationsprotokoll unabhängigen Kommunikationsdienstaufruf aufruft; und
• wobei die zugehörige Dienstgebereinheit (PRX1, PRX2) eine von dem voreingestellten Kommunikationsprotokoll unabhängige Anforderungsmeldung mit den Parametern an den mindestens einen Kommunikationsleitrechner (SRV1, SRV2) sendet.

8. Verfahren nach Anspruch 7,
**dadurch gekennzeichnet,**
**dass** die Dienstgebereinheit (PRX1, PRX2), als Stellvertreterleitrechnereinheit für die Kommunikation zwischen der mindestens einen Dienstnehmereinheit (SC1, SC2) und dem mindestens einen Kommunikationsleitrechner (SRV1, SRV2) ausgestaltet ist.

9. Verfahren nach einem der Ansprüche 7 oder 8,
**dadurch gekennzeichnet,**
**dass** eine Signalisierungsnachricht aus einer Sequenz mehrerer Signalisierungseinzelnachrichten besteht.

10. Verfahren nach einem der Ansprüche 7 bis 9,
**dadurch gekennzeichnet,**
**dass** mindestens ein Kommunikationsleitrechner (SRV1, SRV2) für einen Austausch von Signalisierungsnachrichten nach dem SIP-Protokoll vorgesehen ist.

11. Verfahren nach einem der Ansprüche 7 bis 10,
**dadurch gekennzeichnet,**
**dass** mindestens ein Kommunikationsleitrechner (SRV1, SRV2) für einen Austausch von Signalisierungsnachrichten nach dem H.323-Protokoll vorgesehen ist.

12. Verfahren nach einem der Ansprüche 7 bis 11,
**dadurch gekennzeichnet,**
**dass** nach einem erfolgten Aufbau einer Kommunikationsverbindung ein direkter Austausch von Nutzdaten zwischen den Dienstnehmereinheiten (SC1, SC2) und/oder zwischen mindestens einer Dienstnehmereinheit (SC1, SC2) und einer dem Kommunikationsleitrechner (SRV1, SRV2) zugeordneten Kommunikationseinheit (TERM) erfolgt.

13. Verfahren nach einem der Ansprüche 7 bis 12,
**dadurch gekennzeichnet,**
**dass** die Kommunikationsdienste Web-Services sind.

14. Programmprodukt mit Programmkode zur Durchführung des Verfahrens nach einem der Ansprüche 7 bis 13, wenn das Programmprodukt auf einem der mindestens einen Dienstgebereinheit (PRX1, PRX2) zugeordneten Rechnersystem abläuft.

15. Programmprodukt mit Programmkode zur Durchführung des Verfahrens nach einem der Ansprüche 7 bis 13, wenn das Programmprodukt auf einem der mindestens einen Dienstnehmereinheit (SC1, SC2) zugeordneten Rechnersystem abläuft.

## Claims

1. A device for controlling communication connections in a packet-oriented communication system (CSY), comprising
- at least one communication master computer (SRV1, SRV2) for controlling communication connections based on exchanged signaling messages of a respectively preset communication protocol;
**characterized in that** the communication system (CSY) further comprises
- at least one service provider unit (PRX1, PRX2) being configured as representative master computer unit and thus as proxy server, for providing connection-establishing and
- controlling communication services based on bidirectional communication service calls having at least one service receiver unit (SC1, SC2), wherein the calling service receiver unit (SC1) of the at least one service receiver unit (SC1, SC2) can be registered in advance with the associated service provider unit (PRX1);
the following being provided in the at least one service provider unit (PRX1, PRX2) :
- interfaces with the at least one service receiver unit (SC1, SC2) as well as with the at least one communication master computer (SRV1, SRV2), which converts the signaling message between the respective preset communication protocols;
- means for characterizing an obtained signaling message and for capturing parameters contained in the signaling message and for association to a communication service;
- means for generating at least one signaling message as a result of a communication service call of the at least one service receiver unit (SC1, SC2);
- wherein the at least one service receiver unit (SC1, SC2) calls a communication service based on a web service via a communication service call, which is independent of the preset communication protocol; and
- wherein the associated service provider unit (PRX1, PRX2) sends a request prompt having the parameters, which is independent of the preset communication protocol, to the at least one communication master computer (SRV1, SRV2).

2. The device according to claim 1,
**characterized by**
a service provider unit (PRX1, PRX2), which is configured as representative master computer unit for communication between the at least one service receiver unit (SC1, SC2) and the at last one communication master computer (SRV1, SRV2).

3. The device according to any of claims 1 to 2,
**characterized by**
a signaling message consisting of a sequence of several individual signaling messages.

4. The device according to any of the preceding claims,
**characterized by**
a configuration of at least one communication master computer (SRV1, SRV2) for an exchange of signaling messages according to the SIP protocol.

5. The device according to any of the preceding claims,
**characterized by**
a configuration of at least one communication master computer (SRV1, SRV2) for an exchange of signaling messages according to the H.323 protocol.

6. The device according to any of the preceding claims,
**characterized by**
a direct exchange of payload data between the service receiver units (SC1, SC2) and/or between at least one service receiver unit (SC1, SC2) and a communication unit (TERM) associated to the communication master computer (SRV1, SRV2), after successful establishment of a communication connection.

7. A method for controlling communication connections in a packet-oriented communication system (CSY), comprising
- at least one communication master computer (SRV1, SRV2) for controlling communication connections based on exchanged signaling messages of a respectively preset communication protocol;
**characterized in that** the communication system (CSY) further comprises
- at least one service provider unit (PRX1, PRX2) being configured as representative master computer unit and thus as proxy server, for providing connection-establishing and
- controlling communication services based on bidirectional communication service calls having at least one service receiver unit (SC1, SC2), wherein the calling service receiver unit (SC1) of the at least one service receiver unit (SC1, SC2) can be registered in advance with the associated service provider unit (PRXl);
the following steps being provided in the at least one service provider unit (PRX1, PRX2) :
a) exchange of at least one signaling message to an interface with the at least one communication master computer (SRV1, SRV2), which converts the signaling message between the respective preset communication protocols;
• wherein characterization and capturing of parameters contained in a received signaling message and association to a communication service is implemented via an interface associated to at least one service receiver unit (SC1, SC2);
b) exchange of communication service calls with the at least one communication master computer (SRV1, SRV2);
• wherein generation of at least one signaling message is implemented as a result of a communication service call of the at least one service receiver unit (SC1, SC2);
• wherein the at least one service receiver unit (SC1, SC2) calls a communications service based on a web service via a communication service call, which is independent of the preset communication protocol; and
• wherein the associated service provider unit (PRX1, PRX2) sends a request prompt having the parameters, which is independent of the preset communication protocol, to the at least one communication master computer (SRV1, SRV2).

8. The method according to claim 7,
**characterized**
**in that** the service provider unit (PRX1, PRX2) is configured as representative computer unit for communication between the at least one service receiver unit (SC1, SC2) and the at least one communications master computer (SRV1, SRV2).

9. The method according to any of claims 7 or 8,
**characterized**
**in that** a signaling message is comprised of a sequence of several individual signaling messages.

10. The method according to any of claims 7 to 9,
**characterized**
**in that** the at least one communication master computer (SRV1, SRV2) is provided for an exchange of signaling messages according to the SIP protocol.

11. The method according to any of claims 7 to 10,
**characterized**
**in that** the at least one communication master computer (SRV1, SRV2) is provided for an exchange of signaling messages according to the H.323 protocol.

12. The method according to any of claims 7 to 11,
**characterized**
**in that** a direct exchange of payload data between the service receiver units (SC1, SC2) and/or between at least one service receiver unit (SC1, SC2) and a communication unit (TERM) associated to the communication master computer (SRV1, SRV2) is implemented after successful establishing of a communication connection.

13. The method according to any of claims 7 to 12,
**characterized**
**in that** the communication services are web services.

14. A program product having program code for implementing the method according to any of claims 7 to 13, if the program product is run on a computer system associated to the at least one service provider unit (PRX1, PRX2).

15. Program product having program code for implementing the method according to any of claims 7 to 13, if the program product is run on a computer system associated to the at least one service receiver unit (SC1, SC2).

## Revendications

1. Dispositif pour le contrôle de connexions de communications dans un système de communication orienté paquets (CSY), comprenant
- au moins un ordinateur pilote de communication (SRV1, SRV2) pour le contrôle de connexions de communications sur la base de messages de signalisation échangés d'un protocole de communication respectivement préréglé ;
**caractérisé en ce que** le système de communication (CSY) comprend en outre
- au moins une unité serveur (PRX1, PRX2) réalisée en tant qu'unité d'ordinateur pilote de substitution et ainsi en tant que serveur proxy pour la mise à disposition de services de communication établissant et contrôlant des connexions sur la base d'appels de service de communication bidirectionnels avec au moins une unité client (SC1, SC2), dans lequel l'unité client (SC1) appelante de l'au moins une unité client (SC1, SC2) peut être enregistrée en avance au niveau de l'unité serveur (PRX1) associée ;
dans lequel dans l'au moins une unité serveur (PRX1, PRX2), il est prévu
- des interfaces avec l'au moins une unité client (SC1, SC2) ainsi qu'avec l'au moins un ordinateur pilote de communication (SRV1, SRV2), qui convertit le message de signalisation entre les protocoles de communication respectivement préréglés ;
- un moyen de caractérisation d'un message de signalisation reçu et d'extraction de paramètres contenus dans le message de signalisation et d'attribution à un service de communication ;
- un moyen de génération d'au moins un message de signalisation suite à un appel de service de communication de l'au moins une unité client (SC1, SC2) ;
- dans lequel l'au moins une unité client (SC1, SC2) appelle un service de communication sur la base d'un service Web par le biais d'un appel de service de communication indépendant du protocole de communication préréglé ; et
- dans lequel l'unité serveur (PRX1, PRX2) associée envoie un message de demande indépendant du protocole de communication préréglé avec les paramètres à l'au moins un ordinateur pilote de communication (SRV1, SRV2).

2. Dispositif selon la revendication 1,
**caractérisé par**
une unité serveur (PRX1, PRX2), laquelle est configurée en tant qu'unité d'ordinateur pilote de substitution pour la communication entre l'au moins une unité client (SC1, SC2) et l'au moins un ordinateur pilote de communication (SRV1, SRV2).

3. Dispositif selon l'une quelconque des revendications 1 à 2,
**caractérisé par**
un message de signalisation composé d'une séquence de plusieurs messages individuels de signalisation.

4. Dispositif selon l'une quelconque des revendications précédentes,
**caractérisé par**
une configuration d'au moins un ordinateur pilote de communication (SRV1, SRV2) pour un échange de messages de signalisation selon le protocole SIP.

5. Dispositif selon l'une quelconque des revendications précédentes,
**caractérisé par**
une configuration d'au moins un ordinateur pilote de communication (SRV1, SRV2) pour un échange de messages de signalisation selon le protocole H.323.

6. Dispositif selon l'une quelconque des revendications précédentes,
**caractérisé par**
un échange direct de données utiles, après l'établissement d'une connexion de communication, entre les unités client (SC1, SC2) et/ou entre au moins une unité client (SC1, SC2) et une unité de communication (TERM) associée à l'ordinateur pilote de communication (SRV1, SRV2).

7. Méthode pour le contrôle de connexions de communications dans un système de communication orienté paquets (CSY), comprenant
- au moins un ordinateur pilote de communication (SRV1, SRV2) pour le contrôle de connexions de communications sur la base de messages de signalisation échangés d'un protocole de communication respectivement préréglé ;
**caractérisée en ce que** le système de communication (CSY) comprend en outre
- au moins une unité serveur (PRX1, PRX2) réalisée en tant qu'unité d'ordinateur pilote de substitution et ainsi en tant que serveur proxy pour la mise à disposition de services de communication établissant et contrôlant des connexions sur la base d'appels de service de communication bidirectionnels avec au moins une unité client (SC1, SC2), dans laquelle l'unité client (SC1) appelante de l'au moins une unité client (SC1, SC2) peut être enregistrée en avance au niveau de l'unité serveur (PRX1) associée ;
dans laquelle dans l'au moins une unité serveur (PRX1, PRX2), les étapes suivantes sont prévues :
a) échange d'au moins un message de signalisation à une interface avec l'au moins un ordinateur pilote de communication (SRV1, SRV2), qui convertit le message de signalisation entre les protocoles de communication respectivement préréglés ;
• dans laquelle il y a une caractérisation et une extraction de paramètres contenus dans un message de signalisation reçu et une attribution à un service de communication disponible par le biais d'une interface associée à au moins une unité client (SC1, SC2) ;
b) échange d'appels de service de communication avec l'au moins un ordinateur pilote de communication (SRV1, SRV2) ;
• dans laquelle il y a une génération d'au moins un message de signalisation suite à un appel de service de communication de l'au moins une unité client (SC1, SC2) ;
• dans laquelle l'au moins une unité client (SC1, SC2) appelle un service de communication sur la base d'un service Web par le biais d'un appel de service de communication indépendant du protocole de communication préréglé ; et
• dans laquelle l'unité serveur (PRX1, PRX2) associée envoie un message de demande indépendant du protocole de communication préréglé avec les paramètres à l'au moins un ordinateur pilote de communication (SRV1, SRV2).

8. Méthode selon la revendication 7,
**caractérisée en ce**
**que** l'unité serveur (PRX1, PRX2) est configurée en tant qu'unité d'ordinateur pilote de substitution pour la communication entre l'au moins une unité client (SC1, SC2) et l'au moins un ordinateur pilote de communication (SRV1, SRV2).

9. Méthode selon l'une quelconque des revendications 7 ou 8,
**caractérisée en ce**
**qu'**un message de signalisation se compose d'une séquence de plusieurs messages individuels de signalisation.

10. Méthode selon l'une quelconque des revendications 7 à 9,
**caractérisée en ce**
**qu'**au moins un ordinateur pilote de communication (SRV1, SRV2) est prévu pour un échange de messages de signalisation selon le protocole SIP.

11. Méthode selon l'une quelconque des revendications 7 à 10,
**caractérisée en ce**
**qu'**au moins un ordinateur pilote de communication (SRV1, SRV2) est prévu pour un échange de messages de signalisation selon le protocole H.323.

12. Méthode selon l'une quelconque des revendications 7 à 11,
**caractérisée en ce**
**qu'**il y a un échange direct de données utiles, après l'établissement d'une connexion de communication, entre les unités client (SC1, SC2) et/ou entre au moins une unité client (SC1, SC2) et une unité de communication (TERM) associée à l'ordinateur pilote de communication (SRV1, SRV2).

13. Méthode selon l'une quelconque des revendications 7 à 12,
**caractérisée en ce**
**que** les services de communication sont des services Web.

14. Produit de programme avec code de programme pour la réalisation de la méthode selon l'une quelconque des revendications 7 à 13, lorsque le produit de programme est exécuté sur un système d'ordinateur associé à l'au moins une unité serveur (PRX1, PRX2).

15. Produit de programme avec code de programme pour la réalisation de la méthode selon l'une quelconque des revendications 7 à 13, lorsque le produit de programme est exécuté sur un système d'ordinateur associé à l'au moins une unité client (SC1, SC2).
